# EUROPEAN PATENT SPECIFICATION

(11) **EP 2 251 996 B1**
(45) Date of publication and mention of the grant of the patent: **17.10.2018**
(21) Application number: 08784086.4
(22) Date of filing: 21.08.2008
(51) Int. Cl.: H04J 3/06, H04W 88/08, H04W 56/00, H04B 1/40

(54) **CLOCK SYNCHRONOUS SYSTEM**
TAKTSYNCHRONES SYSTEM
SYSTÈME D'HORLOGE SYNCHRONE

(30) Priority: 03.03.2008 CN 200810083109
(43) Date of publication of application: 17.11.2010
(73) Proprietor: ZTE Corporation, Shenzhen, Guangdong 518057 (CN)
(72) Inventor: XIANG, Jiying, Guangdong 518057 (CN); LI, Zongan, Guangdong 518057 (CN)
(74) Representative: Novagraaf Technologies
(86) International application number: PCT/CN2008/072095
(87) International publication number: WO 2009/109088

(56) References cited:
- WO-A1-2007/124995
- CN-A- 1 247 437
- CN-A- 1 728 600

## Description

### Filed of the Invention

The present invention relates to the communication field, in particular to a system for Synchronizing Clock.

### Background of the Invention

A wireless base station may be divided into two parts in view of function: a radio equipment control (REC) part which can also be called a base band (BB) part and a radio equipment (RE) part which can also be called a radio frequency module (RFM) part. The above base band part and the radio frequency module part may also be called a BBU and an RRU respectively, which essentially refer to the two parts of the base band digital part and the radio frequency part. The above base band part and the radio frequency module part are represented as REC/BB and RE/RFM hereinafter, respectively.

One REC/BB may correspond to a plurality of RE/RFMs. Regarding the physical position, the REC/BB and the RE/RFM may be set together, and may also be set separately. A standard or nonstandard interface mode is used between the REC/BB and the RERFM. The common public radio interface (CPRI) and the open base station architecture initiative (OBSAI) interface are typical standard interfaces. The base band radio frequency interface is generally called as BR (base band and radio frequency) interface hereinafter, which may be the CPRI and the OBSAI, and may also be a self-defined protocol interface.

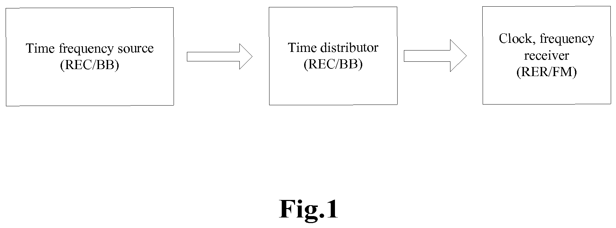

The wireless base station often requires synchronization in the whole network, i.e., the REC/BB synchronizes with all of the RE/RFMs, while in the prior art, the method for solving the synchronization in the whole network is to set a time distributor on the REC/BB side, and then the clock is distributed to all of the RE/RFMs through the time distributor on the REC/BB side, as shown in Fig.1.

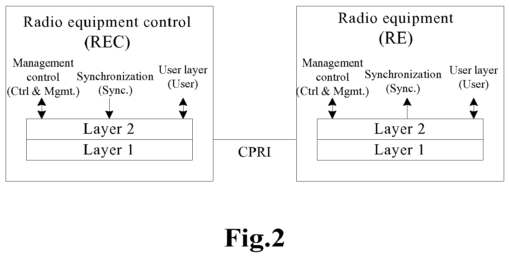

Fig.2 is a diagram of the network architecture of the conventional CPRI. As can be seen from Fig.2, the clock source is located at the REC, the clock is transmitted on the CPRI interface through the message fields such as Z.0.0 (start of hyper-frame, K28.5), Z.64.0 (hyper-frame number), and Z.128.0/Z.192.0 (NodeB frame number), and the RE receives these messages from the CPRI interface and keeps the synchronization in the whole network using these messages.

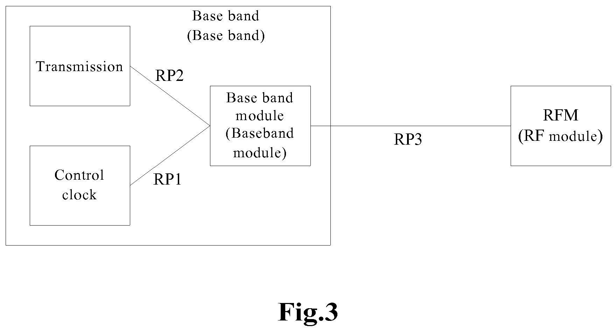

Fig.3 is a diagram of the network architecture of the conventional OBSAI. As can be seen from Fig.3, in the BB module there is a control & clock module (called Con. & Clock for short in the figure) which is responsible for generating a reference clock, and then the synchronous signal is transmitted to the RFM through an RP3 interface by using the fields or the messages such as K28.7, frame clock burst, system frame time (SFN), and time stamp. Then, the RFM keeps the synchronization with other network elements according to the synchronization information obtained.

The above technical scheme that the clock source is located at the REC/BB and distributed to the RE/RFM by the base band radio frequency interface has the following problems: part of the time receivers (for example GPS) depends on antennas, while the position at which the REC/BB is set is often not suitable for arranging an antenna. Therefore, the antenna shall be connected to the REC/BB from a position which is suitable for arranging the antenna, which brings out complexity in the engineering aspect and even can lead the network construction to be infeasible.

An improved technology is to set the time receiver (for example GPS) at the outside of the base band, and then the clock synchronous signals are transmitted to the base band through a dedicated cable. The defect of this improved technology lies in that a cable for transmitting the clock/synchronous signals still needs to be added, which indeed can bring inconvenience for the engineering just the same as by adding the receiving antenna, meanwhile, if this technology is used, circuits such as lightening-proof need to be added at the base band part correspondingly, and the reliability of the long distance transmission is also a problem.

It can be seen that all the above-mentioned technologies have the problems such as difficulty in engineering installation, high cost, and low reliability.

Document WO 2007/124995 relates to a method for the synchronization of components of a base station to a reference clock signal. However, the above mentioned problems remain unsolved.

### Summary of the Invention

In view of the one or more problems mentioned above, the present invention aims at providing a system for synchronizing clock to realize the synchronization between the radio frequency side and the base band side of the base station under the circumstance that no antenna is relied on and no dedicated cable is added.

The system for synchronizing clock according to the present invention, which is used to realize the synchronization between a radio frequency module and a base band module in a base station, comprises: one or more time generators, located on the radio frequency module side, configured to generate a synchronous signal according to an external clock signal, and to send the synchronous signal to a time distributor; and the time distributor, located on the base band module side, configured to generate a synchronous clock according to a synchronous signal from one of the one or more time generators, and to adjust the synchronous clock according to a communication delay between the time generator which outputs the synchronous signal and the time distributor, and to send the synchronous clock adjusted to the radio frequency side and the base band side to realize the synchronization between the radio frequency module and the base band module.

Wherein the time generator comprises: a clock receiving unit, configured to receive the external clock signal, and to send the clock signal to a synchronization generating unit; the synchronization generating unit, configured to generate the synchronous signal according to the clock signal, and to send the synchronous signal to the base band radio frequency interface of the time generator.

Wherein the time generator further comprises: a protocol terminating unit, configured to set a base band radio frequency interface protocol between the time generator and the time distributor.

Wherein the time distributor comprises: an arbitrating unit, configured to generate a selecting rule for selecting the synchronous signal from one of the time generators; a generator selecting unit, configured to select the synchronous signal for generating the synchronous clock from the synchronous signals received according to the selecting rule generated by the arbitrating unit; a clock locking unit, configured to obtain the synchronous signal selected by the generator selecting unit, to generate the synchronous clock according to the synchronous signal obtained, and to adjust the synchronous clock according to the communication delay between the time generator which outputs the synchronous signal and the time distributor; and a clock driving unit, configured to obtain the synchronous clock adjusted by the clock locking unit, and to send the synchronous clock adjusted to the radio frequency module and the base band module.

Wherein the generator selecting unit comprises: a synchronization quality detecting unit, configured to detect one or more synchronous signals of which the quality meets requirements from the synchronous signals from the time generators; a synchronous signal storing unit, configured to store the one or more synchronous signals detected by the synchronization quality detecting unit. Under the circumstance that the current synchronous signal are unusable, the generator selecting unit selects one synchronous signal from the synchronous signal storing unit and send it to the time distributor.

Wherein the time generator is further configured to measure the communication delay between the time generator and the time distributor and to notify the communication delay between the time generator and the time distributor to the time distributor. The time distributor is further configured to inquire a delay calculator the communication delay between the time generator which outputs the synchronous signal and the time distributor according to a source address of the synchronous signal received.

Wherein the time generator is an independent network element or a subsidiary network element inside the base band module of the base station. A network topology relationship among the time generators is a star shape, a link shape, a ring shape, or a tree shape. The time distributor is in a free-vibrating state under the circumstance that the time distributor is just powered on.

Through the present invention, the synchronization between the radio frequency side and the base band side in the base station can be realized under the circumstance that no antenna is relied on and no dedicated cable is added.

### Brief Description of the Drawings

The drawings illustrated here provide a further understanding of the present invention and form a part of the present application. The exemplary embodiments and the description thereof are used to explain the present invention without unduly limiting the scope of the present invention, wherein:
Fig.1 is a diagram of a system for synchronizing clock in the conventional base station;
Fig.2 is a diagram of the network architecture of the conventional CPRI;
Fig.3 is a diagram of the network architecture of the conventional OBSAI;
Fig.4 is a diagram of the network architecture of a system for synchronizing clock in the base station according to an embodiment of the present invention (the time generator is independent);
Fig.5 is a diagram of the network architecture of a system for synchronizing clock in the base station according to an embodiment of the present invention (the time generator is located in the RE/RFM);
Fig.6 is a function block diagram of the time generator according to an embodiment of the present invention;
Fig.7 is a schematic view of the data processing procedure of the time generator according to an embodiment of the present invention;
Fig.8 is a schematic view of the format of the synchronous signal flow according to an embodiment of the present invention;
Fig.9 is a logic block diagram of the clock distributor according to an embodiment of the present invention;
Fig.10 is a logic block diagram of the time generator selector according to an embodiment of the present invention.

### Detailed Description of Embodiments

The system for realizing the synchronization between a radio frequency side and a base band side in the base station according to the embodiment of the present invention comprises: one or more time generators located on the radio frequency (RE/RFM) side, and a time distributor located on the base band (REC/BB) side.

Wherein the time generator may be an independent network element, and also may be located inside the RE/RFM. The time distributor and the time generators communicate with each other through an existed base band radio frequency interface without adding any dedicated transmission line. The time distributor may communicate with one or more radio frequency links, and each radio frequency link may have one or more time generators. Wherein the network topology relationship among the time generators is a star shape/a link shape/a ring shape/a tree shape.

Wherein the time generator mainly comprises a time receiver (i.e., a time receiving unit), a synchronization generator (Sync generator, i.e., a synchronization generating unit), and a base band radio frequency interference terminator (BR protocol terminer, i.e., a protocol terminating unit).

Wherein the time receiver receives the clock signal and transmits it to the synchronization generator. The synchronization generator generates the synchronous signal according to the clock signal, and inserts the synchronous signal generated into the base band radio frequency interface. Wherein the time receiver transmits transparently the data flow signal to the next level. The synchronous signal flow (Sync flow) generated by the synchronization generator may have a plurality of attributes which can label the source address, and can label the time stamp.

Wherein the time distributor mainly comprises an active time generator selector (time generator selector, i.e., a generator selecting unit), an arbiter (i.e., an arbitrating unit), a clock locker (i.e., a clock locking unit), and a clock driver (i.e., a clock driving unit).

Wherein inside the active time generator selector, it comprises a plurality of synchronization quality detectors (Quality inspector, i.e., a synchronization quality detecting unit), it also comprises a candidate synchronization flow pool (candidate pool, i.e., a synchronization signal storing unit).

Wherein the synchronization quality detector detects a plurality of synchronization flows from a plurality of links, and sends the synchronization flows which met the quality requirements after being detected to the synchronization flow pool (the state of the synchronization flow can be "normal", "abnormal" or "usable but on hold state" and so on, the synchronization flow which meets the quality requirements herein refers to the synchronization flow in the normal state.). The active time generator selector performs the selection from a plurality of synchronization flows according to the selecting rule generated by the arbitrator, and only selects one synchronization flow at a certain time.

Wherein the clock locker generates the synchronization clock according to the synchronization flow selected, adjusts the synchronization clock according to the delay, and sends the synchronization clock to the clock driver after the synchronization clock is adjusted, and then the clock driver sends the synchronization clock to the base band and radio frequency unit.

Wherein the time generator needs to be able to measure the transmission delay between the base bands REC/BB, or the active time generator selector needs to be able to inquire the delay of the source node from the delay calculator according to the source address of the synchronization signal to ensure that the clock locker may adjust the synchronization signal according to this delay.

Wherein when the current synchronization flow is unusable, the active time generator selector automatically selects another synchronization flow from the candidate flows. When the time distributor is powered on, it is in the free-vibrating state, and when the first normal sync flow is detected and locked, at the same time the delay data is correctly obtained, the time distributor normally outputs and inserts the active synchronization flow to the BR interface. RE/RFM synchronizes the signal according to the active synchronization flow (active sync flow).

The embodiments of the present invention will be described hereinafter in detail in conjunction with the drawings thereof.

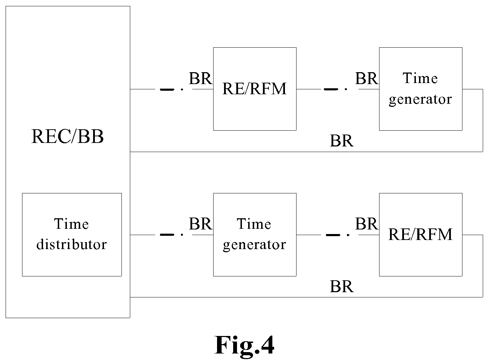

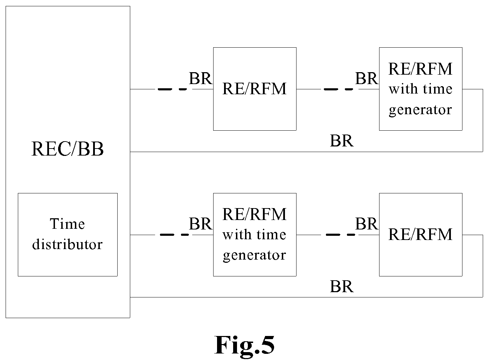

Fig.4 and Fig.5 are diagrams of the network architecture of a system for synchronizing clock according to the embodiments of the present invention. As can be seen from these figures, the time generator is not located in the REC/BB anymore, but is located on the link from the base band to the radio frequency Wherein the time generator in Fig.4 is an independent component, while the time generator in Fig. 5 is set in the radio frequency unit RE/RFM.

The BR in Fig.4 and Fig.5 is an interface from the base band to the radio frequency The BR interface may be an enhanced CPRI interface (which is improved and supports the time generator), may also be an enhanced OBSAI RP3 interface (which is improved and supports the time generator), and may also be a self-defined base band/radio frequency interface. The BR interface may be connected to a plurality of components, and the topology relationship between each component may be a star shape/a link shape/a ring shape/a tree shape. The interfaces of the time generator to other components are BR interfaces, and in the whole network there may be not only one time generator, even on the same BR link (or ring) there may be more than one time generators. The time distributor is still located on the REC/BB in order to manage uniformly the clocks output from a plurality of time generators.

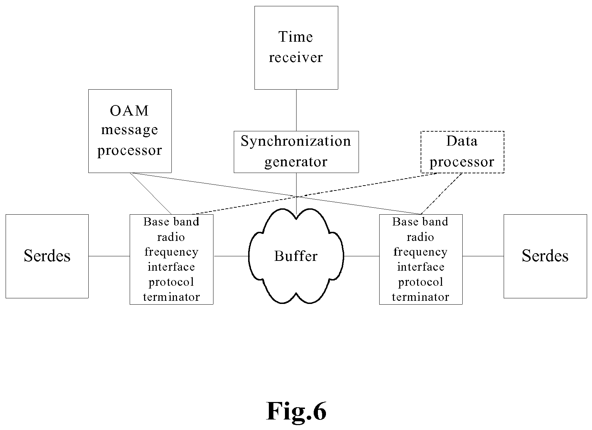

Fig.6 is a function block diagram of the time generator according to an embodiment of the present invention. As shown in Fig.6, the working principle of this time generator is: a serdes (serializer/desarializer) and a BR protocol terminator terminate the physical layer of the BR interface and the layer 2/layer 3 protocols, and transmits the data obtained to a buffer The time receiver receives the clock signal, and after determining that the clock received is stable and reliable, the synchronous signal is generated The time receiver may be a GPS receiver, or an IEEE1588 terminal, or the time receivers of other forms. The synchronous signal generated by the time generator is sent to the sync generator. If the time generator is not imbedded in an RE/RFM, the data flow input by the BR interface of the upper level is transmitted transparently to the next level without being processed. Otherwise, the data flow is processed and transmitted according to the requirements of RE/RFM.

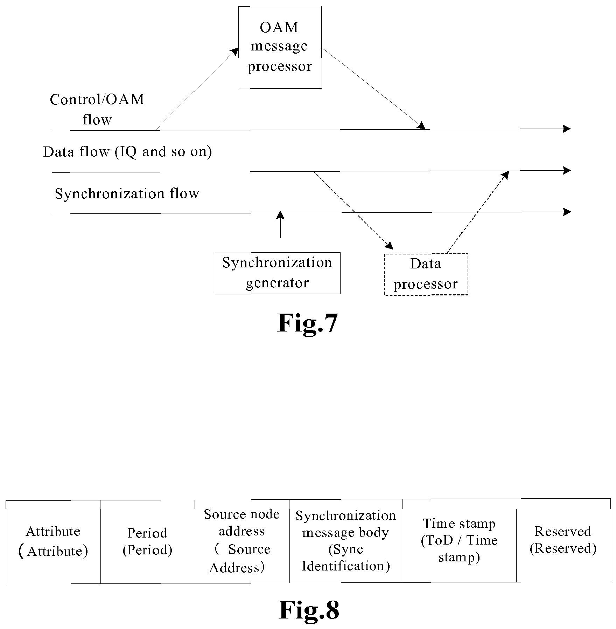

Fig.7 is a schematic view of the data processing procedure of the time generator according to an embodiment of the present invention. As shown in Fig.7, the control/ OAM (operation/administration and maintenance) flow input by the BR interface of the upper level is determined whether it belongs to the time generator, if the flow belongs to the time generator, the flow will be forwarded to an operation and maintenance message processor (OAM message processor) to be processed; otherwise the flow will be transmitted transparently to the next level. The synchronization generator generates the synchronization information flow (sync flow) according to the requirements of the BR interface protocol, and inserts it into the BR interface. The sync flow from the upper level is transmitted transparently to the next level.

Wherein the sync flow is one kind of message transmitted between the REC/BB and the RE/RFM or the time generator, it is multiplexed into the base band radio frequency interface BR together with other messages and data. Fig.8 gives an example of a possible format of the synchronization flow. The following fields are comprised in the example:
Attribute: labeling the attribute of the message which may be an active state or a passive state, wherein the unmodified message is in the passive state, otherwise, the massage is in the active state. The message with the active state must be sent by the REC/BB.
Period: labeling the period of the message, such as once a second, or once each 10ms.
Source address: labeling the source node address of the time generator which generated the sync flow, if the time generator is embedded in the RE/RFM, it is the same as the address of the RE/RFM.
Sync identification: synchronization message body.
ToD/time stamp: time of day or time stamp, for labeling a long period.
Reserved: reserved

Since in a same network there may be a plurality of time sources, the sync generator needs to mark its identification (source address) in the synchronization information flow. This address (for example, RFS_ID) may be obtained from the system when the system is powered on according to the same rule with that of the RE/RFM network.

The same as the normal RE/RFM, the time generator needs to participate and cooperate in the measurement of the system delay. The time distributor is located on the REC/BB side, the reason that the time distributor is located on the REC/BB side but not at the RE/RFM side is that only the REC/BB can exclusively select the active clock from a plurality of clock sources.

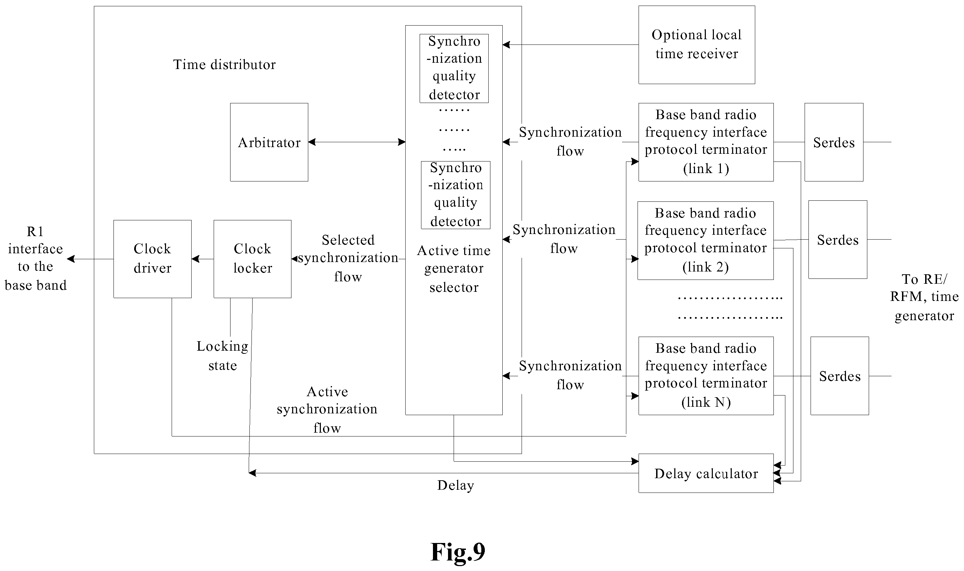

Fig.9 is a logic diagram of the time generator according to the embodiments of the present invention. As shown in Fig.9, the time distributor comprises an active time generator selector, an arbitrator, a time generator and a clock driver.

In the same system, the sync flow may be from several sources, even in the same radio frequency link there may be a plurality of clock sources which work simultaneously, and therefore the time distributor needs to select one clock source from a plurality of clock sources as an active synchronization flow (selected sync).

Firstly, a plurality of BR protocol terminators terminates the BR protocol, parses and obtains the sync flow signals thereof and sends the signals to the time generator selector to be selected. Wherein each radio frequency link may be parsed to obtain zero, one, or a plurality of synchronization flows according to the actual arrangement situation of the time generator. Except for the synchronization flow from the BR interface, one or more local time receivers is/are allowed, and the synchronization signal obtained by the local time receiver is treated the same as the synchronization signal of the BR interface.

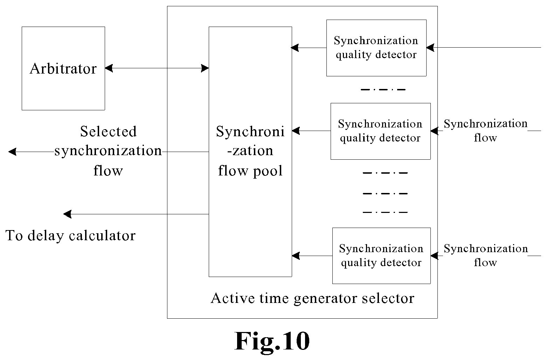

Fig. 10 is a logic diagram of the time generator selector according to an embodiment of the present invention. As shown in Fig.10, inside the time generator selector it comprises a plurality of synchronization quality detectors and a candidate synchronous signal pool.

The input sync flow is firstly sent to the synchronization quality detector, and the synchronization quality detector detects each synchronization flows which are labeled as "passive" (the synchronization flows which are labeled as active do not need to be processed), and the normal synchronization flows thereof are sent to the candidate pool (candidate synchronous signal pool), and the abnormal synchronization flows are discarded. Herein, the "clock quality" may have not only the two states of "normal" and "abnormal", but may also have other states, for example, "the state of usable but hold" and so on.

An active synchronous signal (selected sync flow) is uniquely selected from the signals entered the candidate synchronous signal pool according to the rule predetermined by the arbitrator.

Wherein the selecting rules generated by the arbitrator may be selecting the normal synchronization flow with the smallest sequence number in the link with the smallest sequence number, may also be selecting the synchronization flow with the smallest delay may also use the principle that the local is of a higher priority.

The selected sync flow output by the time generator selector enters the clock locker, and it generates various clocks needed by the system according to the synchronous signal. The clock locker may be composed of a plurality of phase-locked loops (PLL).

The clocks generated by the clock locker are sent to the clock driver, and are distributed to each component which need the synchronization clock in the system, for example, the base band radio frequency interface (BR) unit, the base band modem unit and so on.

As can be seen from the network structure diagram in Fig.4 or Fig.5, the clocks received by the time generator may need a long distance transmission before arriving at the REC/BB, therefore these clocks have had the deviation before arriving at the distribution points.

The transmission time of the signal in the link can be measured on the BR interface, and each node on the BR interface may calculate the delay to the REC/BB. For the same reason, the time generator hang on the BR interface can also calculate the delay to the REC/BB, and this delay data is notified to the REC/BB through a message.

After receiving the synchronization flow selected, the time generator selector sends a request to the delay calculator according to the source address of the synchronization signal.

The delay calculator checks the delay of the node corresponding to the source address, and sends the delay to the clock locker The latter modifies the output overall synchronization signals according to the number of the delay (for example, notifying the base band modem unit to emit in advance, notifying the base band modem unit to modify the search scope, and notifying the RE/RFM to modify the reference time and so on).

As described above, the arbitrator selects the active synchronization flow according to a certain rule. When the selected sync flow is not usable, the system can automatically select another sync flow from the candidate pool, and synchronizes with the new sync flow. After the sync flow is switched, the clock locker needs to modify the synchronization signal according to the new value of the delay.

When the candidate pool is empty, it indicates that any normal sync flow is not usable, at this time, the alarm needs to be reported, and the clock locker enters to a free vibrating state, correspondingly, each node on the BR interface also vibrates along with the REC/BB. The data transmission among each node is still normal, but the synchronization in the whole network can not be maintained.

At the moment of powering on, in order to maintain the normal work, the candidate pool needs to be cleaned up, and at this time, the clock locker is in a free-vibrating state, each node on the BR interface also vibrates along with the REC/BB. When the first normal sync flow is detected, the time generator selector immediately outputs this signal and sends it to the clock locker, the clock locker tries to lock this signal, after the locking is successful, and the delay of the source node is successfully obtained, a locking indication is given, and the modified synchronous message is inserted into the BR interface. The synchronous message inserted into the BR is labeled as "active".

When any one of the following three conditions is not satisfied, the clock locker does not output the active sync flow: the input selected sync flow must be effective; the clock locker must be locked, the delay corresponding to the selected sync flow must be normal.

After receiving the sync flow, the RE/RFM firstly makes a judgment: one kind of sync flow may come from the clock locker of the upper level, and this kind of sync flow is not calibrated by the REC/BB, and the attribute thereof is labeled as passive, the REC/BB only transmits this kind of synchronization signal to the next level transparently without processing; another kind of sync flow is sent out after being calibrated by the time distributor of the REC/BB, and the attribute of this kind of sync flow is labeled as active. In the same time period there is only one active sync flow. The REC/BB calibrates its own clock according to this active sync flow to ensure that it synchronizes with the REC/BB and other RE/RFMs.

Above description is only to illustrate the preferred embodiments but not to limit the present invention. Various alterations and changes to the present invention are apparent to those skilled in the art. The scope defined in claims shall comprise any modification, equivalent substitution and improvement within the principle of the present invention.

## Claims

1. A system for synchronizing clock, which is used to realize the synchronization between a radio frequency module and a base band module in a base station, **characterized by**, comprising:
one or more time generators, located on the radio frequency module side, configured to generate a synchronous signal according to an external clock signal from outside the system, and to send the synchronous signal to a time distributor; and
the time distributor, located on the base band module side, configured to generate a synchronous clock according to the
synchronous signal from one of the one or more time generators, and to adjust the synchronous clock according to a communication delay between the time generator which outputs the synchronous signal and the time distributor, and to send the synchronous clock adjusted to the radio frequency module and the base band module to realize the synchronization between the radio frequency module and the base band module.

2. The system according to Claim 1, **characterized in that** the time generator comprises:
a clock receiving unit, configured to receive the external clock signal, and to send the clock signal to a synchronization generating unit;
the synchronization generating unit, configured to generate the synchronous signal according to the clock signal, and to send the synchronous signal to the base band radio frequency interface of the time generator.

3. The system according to Claim 1, **characterized in that** the time generator further comprises:
a protocol terminating unit, configured to set a base band radio frequency interface protocol between the time generator and the time distributor.

4. The system according to Claim 1, **characterized in that** the time distributor comprises:
an arbitrating unit, configured to generate a selecting rule for selecting the synchronous signal from one of the time generators;
a generator selecting unit, configured to select the synchronous signal for generating the synchronous clock from the synchronous signals received according to the selecting rule generated by the arbitrating unit;
a clock locking unit, configured to obtain the synchronous signal selected by the generator selecting unit, to generate the synchronous clock according to the synchronous signal obtained, and to adjust the synchronous clock according to the communication delay between the time generator which outputs the synchronous signal and the time distributor; and
a clock driving unit, configured to obtain the synchronous clock adjusted by the clock locking unit, and to send the synchronous clock adjusted to the radio frequency module and the base band module.

5. The system according to Claim 4, **characterized in that** the generator selecting unit comprises:
a synchronization quality detecting unit, configured to detect one or more synchronous signals of which the quality meets requirements from the synchronous signals from the time generators;
a synchronous signal storing unit, configured to store the one or more synchronous signals detected by the synchronization quality detecting unit.

6. The system according to Claim 5, **characterized in that** under the circumstance that the current synchronous signal are unusable, the generator selecting unit selects one synchronous signal from the synchronous signal storing unit and send it to the time distributor.

7. The system according to any one of Claims 1-6, **characterized in that** the time generator is further configured to measure the communication delay between the time generator and the time distributor and to notify the communication delay between the time generator and the time distributor to the time distributor.

8. The system according to any one of Claims 1-6, **characterized in that** the time distributor is further configured to inquire a delay calculator the communication delay between the time generator which outputs the synchronous signal and the time distributor according to a source address of the synchronous signal received.

9. The system according to Claim 7, **characterized in that** the time generator is an independent network element or a subsidiary network element inside the radio frequency module of the base station.

10. The system according to Claim 9, **characterized in that** a network topology relationship among the time generators is a star shape, a link shape, a ring shape, or a tree shape.

11. The system according to Claim 10, **characterized in that** the time distributor is in a free-vibrating state under the circumstance that the time distributor is just powered on.

12. The system according to Claim 8, **characterized in that** the time generator is an independent network element or a subsidiary network element inside the radio frequency module of the base station.

13. The system according to Claim 12, **characterized in that** a network topology relationship of the time generators is a star shape, a link shape, a ring shape, or a tree shape.

14. The system according to Claim 13, **characterized in that** the time distributor is in a free-vibrating state under the circumstance that the time distributor is just powered on.

## Patentansprüche

1. System zum Synchronisieren von Takt, das dazu verwendet wird, die Synchronisation zwischen einem Funkfrequenzmodul und einem Basisbandmodul in einer Basisstation zu realisieren, **dadurch gekennzeichnet, dass** es umfasst:
einen oder mehrere auf der Funkfrequenzmodul-Seite liegende Zeitgeber, die dazu konfiguriert sind, ein synchrones Signal gemäß einem externen Taktsignal von außerhalb des Systems zu erzeugen und das synchrone Signal an einen Zeitverteiler zu senden; und
den auf der Basisbandmodul-Seite liegenden Zeitverteiler, der dazu konfiguriert ist, einen synchronen Takt gemäß dem synchronen Signal von einem aus dem einen oder mehreren Zeitgebern zu erzeugen und den synchronen Takt gemäß einer Kommunikationsverzögerung zwischen dem Zeitgeber, der das synchrone Signal ausgibt, und dem Zeitverteiler anzupassen, und den angepassten synchronen Takt an das Funkfrequenzmodul und das Basisbandmodul zu senden, um die Synchronisation zwischen dem Funkfrequenzmodul und dem Basisbandmodul zu realisieren.

2. System nach Anspruch 1, **dadurch gekennzeichnet, dass** der Zeitgeber umfasst:
eine Taktempfangseinheit, die dazu konfiguriert ist, das externe Taktsignal zu empfangen und das Taktsignal an eine Synchronisationserzeugungseinheit zu senden;
die Synchronisationserzeugungseinheit, die dazu konfiguriert ist, das synchrone Signal gemäß dem Taktsignal zu erzeugen, und das synchrone Signal an die Basisband-Funkfrequenz-Schnittstelle des Zeitgebers zu senden.

3. System nach Anspruch 1, **dadurch gekennzeichnet, dass** der Zeitgeber weiter umfasst:
eine Protokoll-Abschlusseinheit, die dazu konfiguriert ist, ein Basisband-Funkfrequenz-Schnittstellenprotokoll zwischen dem Zeitgeber und dem Zeitverteiler einzurichten.

4. System nach Anspruch 1, **dadurch gekennzeichnet, dass** der Zeitverteiler umfasst:
eine Arbitrierungseinheit, die dazu konfiguriert ist, eine Auswahlregel zum Auswählen des synchronen Signals von einem der Zeitgeber zu erzeugen;
eine Geberauswahleinheit, die dazu konfiguriert ist, das synchrone Signal zum Erzeugen des synchronen Takts aus den empfangenen synchronen Signalen gemäß der von der Arbitrierungseinheit erzeugten Auswahlregel auszuwählen;
eine Taktverriegelungseinheit, die dazu konfiguriert ist, das von der Geberauswahleinheit ausgewählte synchrone Signal zu erhalten, den synchronen Takt gemäß dem erhaltenen synchronen Signal zu erzeugen, und den synchronen Takt gemäß der Kommunikationsverzögerung zwischen dem Zeitgeber, der das synchrone Signal ausgibt, und dem Zeitverteiler anzupassen; und
eine Takttreibereinheit, die dazu konfiguriert ist, den von der Taktverriegelungseinheit angepassten synchronen Takt zu erhalten, und den angepassten synchronen Takt an das Funkfrequenzmodul und das Basisbandmodul zu senden.

5. System nach Anspruch 4, **dadurch gekennzeichnet, dass** die Geberauswahleinheit umfasst:
eine Synchronisationsqualität-Erfassungseinheit, die dazu konfiguriert ist, ein oder mehrere synchrone Signale zu erfassen, deren Qualität Anforderungen von den synchronen Signalen aus den Zeitgebern erfüllt;
eine Synchronsignal-Speichereinheit, die dazu konfiguriert ist, das eine oder mehrere von der Synchronisationsqualität-Erfassungseinheit erfasste synchrone Signale zu speichern.

6. System nach Anspruch 5, **dadurch gekennzeichnet, dass** unter dem Umstand, dass das aktuelle synchrone Signal nicht verwendbar ist, die Geberauswahleinheit ein synchrones Signal aus der Synchronsignal-Speichereinheit auswählt und dasselbe an den Teilverteiler sendet.

7. System nach einem der Ansprüche 1-6, **dadurch gekennzeichnet, dass** der Zeitgeber weiter dazu konfiguriert ist, die Kommunikationsverzögerung zwischen dem Zeitgeber und dem Zeitverteiler zu messen und die Kommunikationsverzögerung zwischen dem Zeitgeber und dem Zeitverteiler an den Zeitverteiler zu melden.

8. System nach einem der Ansprüche 1-6, **dadurch gekennzeichnet, dass** der Zeitverteiler weiter dazu konfiguriert ist, von einem Verzögerungsrechner die Kommunikationsverzögerung zwischen dem Zeitgeber, der das synchrone Signal ausgibt, und dem Zeitverteiler gemäß einer Quelladresse des empfangenen synchronen Signals zu erfragen.

9. System nach Anspruch 7, **dadurch gekennzeichnet, dass** der Zeitgeber ein unabhängiges Netzwerkelement oder ein subsidiäres Netzwerkelement innerhalb des Funkfrequenzmoduls der Basisstation ist.

10. System nach Anspruch 9, **dadurch gekennzeichnet, dass** eine Netzwerktopologie-Beziehung zwischen den Zeitgebern eine Sternform, eine Verbindungsform, eine Ringform oder eine Baumform ist.

11. System nach Anspruch 10, **dadurch gekennzeichnet, dass** sich der Zeitverteiler unter dem Umstand, dass der Zeitverteiler gerade hochgefahren wird, in einem frei schwingenden Zustand befindet.

12. System nach Anspruch 8, **dadurch gekennzeichnet, dass** der Zeitgeber ein unabhängiges Netzwerkelement oder ein subsidiäres Netzwerkelement innerhalb des Funkfrequenzmoduls der Basisstation ist.

13. System nach Anspruch 12, **dadurch gekennzeichnet, dass** eine Netzwerktopologie-Beziehung der Zeitgeber eine Sternform, eine Verbindungsform, eine Ringform oder eine Baumform ist.

14. System nach Anspruch 13, **dadurch gekennzeichnet, dass** sich der Zeitverteiler unter dem Umstand, dass der Zeitverteiler gerade hochgefahren wird, in einem frei schwingenden Zustand befindet.

## Revendications

1. Système de synchronisation d'horloges, qui est utilisé pour réaliser la synchronisation entre un module de radiofréquence et un module de bande de base dans une station de base, **caractérisé en ce qu'**il comprend :
un ou plusieurs générateurs de temps, situés sur le côté module de radiofréquence, configurés pour générer un signal synchrone selon un signal d'horloge externe depuis l'extérieur du système, et pour envoyer le signal synchrone à un distributeur de temps ; et
le distributeur de temps, situé sur le côté module de bande de base, configuré pour générer une horloge synchrone selon le signal synchrone provenant d'un des un ou plusieurs générateurs de temps, et pour ajuster l'horloge synchrone selon un retard de communication entre le générateur de temps qui délivre en sortie le signal synchrone et le distributeur de temps, et pour envoyer l'horloge synchrone ajustée au module de radiofréquence et au module de bande de base pour réaliser la synchronisation entre le module de radiofréquence et le module de bande de base.

2. Système selon la revendication 1, **caractérisé en ce que** le générateur de temps comprend :
une unité de réception d'horloge, configurée pour recevoir le signal d'horloge externe et pour envoyer le signal d'horloge à une unité de génération de synchronisation ;
l'unité de génération de synchronisation, configurée pour générer le signal synchrone selon le signal d'horloge et pour envoyer le signal synchrone à l'interface radiofréquence de bande de base du générateur de temps.

3. Système selon la revendication 1, **caractérisé en ce que** le générateur de temps comprend en outre :
une unité de terminaison de protocole, configurée pour définir un protocole d'interface radiofréquence de bande de base entre le générateur de temps et le distributeur de temps.

4. Système selon la revendication 1, **caractérisé en ce que** le distributeur de temps comprend :
une unité d'arbitrage, configurée pour générer une règle de sélection pour sélectionner le signal synchrone parmi un des générateurs de temps ;
une unité de sélection de générateur, configurée pour sélectionner le signal synchrone pour générer l'horloge synchrone parmi les signaux synchrones reçus selon la règle de sélection générée par l'unité d'arbitrage ;
une unité de verrouillage d'horloge, configurée pour obtenir le signal synchrone sélectionné par l'unité de sélection de générateur, pour générer l'horloge synchrone selon le signal synchrone obtenu et pour ajuster l'horloge synchrone selon le retard de communication entre le générateur de temps qui délivre en sortie le signal synchrone et le distributeur de temps ; et
une unité de commande d'horloge, configurée pour obtenir l'horloge synchrone ajustée par l'unité de verrouillage d'horloge et pour envoyer l'horloge synchrone ajustée au module de radiofréquence et au module de bande de base.

5. Système selon la revendication 4, **caractérisé en ce que** l'unité de sélection de générateur comprend :
une unité de détection de qualité de synchronisation, configurée pour détecter un ou plusieurs signaux synchrones, dont la qualité satisfait des exigences, à partir des signaux synchrones provenant des générateurs de temps ;
une unité de stockage de signal synchrone, configurée pour stocker les un ou plusieurs signaux synchrones détectés par l'unité de détection de qualité de synchronisation.

6. Système selon la revendication 5, **caractérisé en ce que**, dans la circonstance où le signal synchrone actuel est inutilisable, l'unité de sélection de générateur sélectionne un signal synchrone à partir de l'unité de stockage de signal synchrone et l'envoie au distributeur de temps.

7. Système selon l'une quelconque des revendications 1 à 6, **caractérisé en ce que** le générateur de temps est en outre configuré pour mesurer le retard de communication entre le générateur de temps et le distributeur de temps et pour notifier le retard de communication entre le générateur de temps et le distributeur de temps au distributeur de temps.

8. Système selon l'une quelconque des revendications 1 à 6, **caractérisé en ce que** le distributeur de temps est en outre configuré pour demander à un calculateur de retard le retard de communication entre le générateur de temps qui délivre en sortie le signal synchrone et le distributeur de temps selon une adresse source du signal synchrone reçu.

9. Système selon la revendication 7, **caractérisé en ce que** le générateur de temps est un élément de réseau indépendant ou un élément de réseau subsidiaire à l'intérieur du module de radiofréquence de la station de base.

10. Système selon la revendication 9, **caractérisé en ce qu'**une relation de topologie de réseau parmi les générateurs de temps est une forme en étoile, une forme en ligne, une forme en anneau ou une forme en arbre.

11. Système selon la revendication 10, **caractérisé en ce que** le distributeur de temps est dans un état de vibrations libres dans la circonstance où le distributeur de temps vient d'être mis sous tension.

12. Système selon la revendication 8, **caractérisé en ce que** le générateur de temps est un élément de réseau indépendant ou un élément de réseau subsidiaire à l'intérieur du module de radiofréquence de la station de base.

13. Système selon la revendication 12, **caractérisé en ce qu'**une relation de topologie de réseau des générateurs de temps est une forme en étoile, une forme en ligne, une forme en anneau ou une forme en arbre.

14. Système selon la revendication 13, **caractérisé en ce que** le distributeur de temps est dans un état de vibrations libres dans la circonstance où le distributeur de temps vient d'être mis sous tension.
